(19) Europäisches Patentamt
European Patent Office
Office européen des brevets

(11) **EP 3 285 054 B1**

(12) **EUROPÄISCHE PATENTSCHRIFT**

(45) Veröffentlichungstag und Bekanntmachung des Hinweises auf die Patenterteilung:
**03.05.2023 Patentblatt 2023/18**

(21) Anmeldenummer: **17186419.2**

(22) Anmeldetag: **16.08.2017**

(51) Internationale Patentklassifikation (IPC):
**G01J 5/00** (2022.01)   **G01J 5/08** (2022.01)
**B21C 37/04** (2006.01)   **C03B 37/025** (2006.01)

(52) Gemeinsame Patentklassifikation (CPC):
**G01J 5/0022; G01J 5/0096; G01J 5/0887;**
C03B 37/0253; C03B 2205/72; G01J 5/0806

(54) **VERFAHREN ZUM BESTIMMEN DER TEMPERATUR EINES STRANGES**

METHOD FOR DETERMINING THE TEMPERATURE OF A STRAND

PROCÉDÉ DE DÉTERMINATION DE LA TEMPÉRATURE D'UNE BARRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.08.2016 DE 102016115348**

(43) Veröffentlichungstag der Anmeldung:
**21.02.2018 Patentblatt 2018/08**

(73) Patentinhaber: **SIKORA AG**
**28307 Bremen (DE)**

(72) Erfinder:
• **Sikora, Harald**
  **28357 Bremen (DE)**
• **Geerken, Norbert**
  **28357 Bremen (DE)**

• **Bolte, Hilmar**
  **28717 Bremen (DE)**

(74) Vertreter: **Hauck Patentanwaltspartnerschaft mbB**
**Postfach 11 31 53**
**20431 Hamburg (DE)**

(56) Entgegenhaltungen:
WO-A1-99/36367       WO-A1-2016/096201
WO-A2-2014/090994   DE-A1-102011 103 686

• **Wikipedia: "Draht", , 13 June 2016 (2016-06-13), XP055523126, Wikipedia Retrieved from the Internet:**
**URL:https://web.archive.org/web/2016070703 2545/https://de.wikipedia.org/wiki/Draht [retrieved on 2018-11-13]**

EP 3 285 054 B1

## Beschreibung

Die Erfindung betrifft ein Verfahren zur Bestimmung der Temperatur eines Stranges, beispielsweise einer Glasfaser oder eines Drahtes. Beispielsweise Glasfasern werden in Ziehtürmen hergestellt, die durchaus mehr als 30 Meter Höhe besitzen können. Dort wird von einer auf Schmelztemperatur erwärmten Vorform mit etwa 100 bis 250 mm Durchmesser eine Glasfaser mit einer Geschwindigkeit von fast 3000 m/min abgezogen. Die Glasfaser selbst, sofern sie beispielsweise für heutige Datenübertragungsstrecken genutzt werden soll, besitzt typischerweise einen Durchmesser im Bereich von 125 $\mu$m, der mit Genauigkeiten im Nanometerbereich gefertigt werden muss.

Die Abzugstemperatur der Glasfaser im Heißbereich des Ziehturms ist dabei von zentraler Bedeutung. Eine Regelung der Temperatur der Vorform sollte möglichst derart erfolgen, dass bereits im Anfahrprozess bei veränderlicher Abzugsgeschwindigkeit genaue Durchmesser der Glasfaser erzielt werden, um Ausschuss zu minimieren. Im unteren Bereich des Ziehturms durchläuft die Glasfaser eine Kühlstrecke, in der sie auf eine möglichst konstante niedrige Temperatur von zum Beispiel 70° C gekühlt wird. Solche Kühlstrecken werden häufig mit Helium betrieben, das extrem teuer ist, so dass eine unnötige Kühlung zu vermeiden ist, um die Betriebskosten der Ziehturmanlage nicht unnötig zu erhöhen. Auch aus diesem Grund ist eine genaue Kenntnis der Temperatur der Glasfaser wichtig. Hinzu kommt, dass Glasfasern in der Regel im Anschluss an die Kühlstrecke mit einer Beschichtung versehen werden. Für diese Beschichtung ist eine konstante Temperatur der Glasfaser Voraussetzung, um Schwankungen der Dicke und Konzentrizität der insoweit engtolerierten Beschichtung zu minimieren. Auch Knoten und Einschnürungen können in Ziehtürmen durch einen Abtropfeffekt entstehen, wenn die Temperatur der Glasfaser nicht den optimalen Temperatureigenschaften der Beschichtung entspricht.

Es wurde - erfolglos - versucht, die Temperatur derartiger bewegter Stränge, wie Glasfasern oder Drähten, mittels einer Wärmebildkamera zu bestimmen. Dabei wird der zu messende Strang mittels einer Optik fokussiert auf die Wärmebildkamera abgebildet. Die Temperatur wird dann aus dem Maximalwert der von der Wärmebildkamera erfassten Messwerte ermittelt, wie aus WO 2014/090994 A2 bekannt. Diese Vorgehensweise hat sich in der Praxis allerdings nicht als zuverlässig erwiesen. Ein wesentliches Problem ist eine in Relation zur Zeitkonstanten der Pixel der Wärmebildkamera schnelle Bewegung der zu messenden Stränge. Beispielsweise kommt es in Ziehtürmen zur Herstellung von Glasfasern unweigerlich zu hochfrequenten Vibrationen der entlang ihrer Längsachse geförderten Glasfasern. Beispielsweise Glasfasern mit einem Durchmesser von 125 $\mu$m schwingen in einem Ziehturm durchaus um 1 Millimeter sowohl quer als auch längs zur Messebene. Typische thermische Zeitkonstanten von gängigen Wärmebildsensoren liegen im Bereich von 10 Millisekunden. Auch andere Bewegungen während der Produktion oder eine nicht-orthogonale Ausrichtung zur bildgebenden Wärmebildkamera führen zu Messfehlern. Auch kann es während der Fertigung beispielsweise durch langsames Wandern der Faser aus der Mitte aufgrund einer möglicherweise nicht exakt senkrecht stehenden Vorform zur Defokussierung des Strangs kommen. Je nach Glasfaserhersteller wird dies zwar möglicherweise erkannt, aber erst ab einem bestimmten Ausmaß korrigiert.

Aus WO 2016/096201 A1 ist ein Verfahren bekannt, das bei einer ortsaufgelösten Wärmebildkamera die gemessenen Intensitäten benachbarter Pixel mittelt. Dieses Verfahren ist jedoch nur für stationäre Objekte geeignet.

Besonders problematisch sind die erläuternden Schwierigkeiten bei zu messenden Strängen, deren Temperatursignal sich nur wenig vom Temperatursignal eines Hintergrunds abhebt. Dies ist beispielsweise bei Glasfasern aus Quarzglas der Fall, die in dem bei Wärmebildkameras regelmäßig interessierenden Infrarot-Wellenlängenbereich von ca. 7 bis 14 $\mu$m Wärmestrahlung fast wie ein schwarzer Körper emittieren (Emissionsgrad e=0,95). Ein weiteres Problem liegt darin, dass die zu messenden Stränge, beispielsweise Metalldrähte oder Glasfasern, in ihren Abmessungen kleiner sind als das optische Auflösungsvermögen des bildgebenden Systems aus Wärmebildkamera und Optik.

All diese Probleme führen dazu, dass derzeit eine berührungslose Temperaturmessung von Strängen der beschriebenen Art mit Wärmebildsensoren nicht in ausreichend präziser und zuverlässiger Weise möglich ist.

Ausgehend von dem erläuterten Stand der Technik liegt die Erfindung daher die Aufgabe zugrunde, ein Verfahren der eingangs genannten Art bereitzustellen, mit dem die Temperatur von Strängen, wie beispielsweise Drähten und Glasfasern in präziser und zuverlässiger Weise gemessen werden kann.

Die Erfindung löst die Aufgabe durch den Gegenstand von Anspruch 1. Vorteilhafte Ausgestaltungen finden sich in den abhängigen Ansprüchen, der Beschreibung und den Figuren.

Die Erfindung löst die Aufgabe durch ein Verfahren zum Bestimmen der Temperatur eines Stranges, mit den Schritten:

- der Strang wird während des Förderns mit einem ortsauflösenden Wärmebildsensor vor dem Hintergrundstrahler aufgenommen, wobei der durch den Wärmebildsensor gebildete Messwertbereich jederzeit den sich zum Messzeitpunkt vor dem Hintergrundstrahler befindlichen Strangabschnitt vollständig in seiner Breite und darüber hinaus zumindest einen Teil des dahinter befindlichen Hintergrundstrahlers erfasst,

- es wird das Integral gebildet über den den vor dem Hintergrundstrahler befindlichen Strangabschnitt jederzeit vollständig erfassenden Messwertbereich des Wärmebildsensors,

- aus einem Vergleich des gebildeten Integrals mit einem Referenzwert wird auf die Temperatur des Stranges geschlossen, wobei der Referenzwert das Integral über den Messwertbereich ohne vor dem Hintergrundstrahler befindlichen Strang ist.

Erfindungsgemäß wird der Strang in Richtung seiner Längsachse entlang eines Hintergrundstrahlers gefördert und währenddessen von einem ortsauflösenden Wärmebildsensor, insbesondere einem Zeilen- oder Flächensensor (Wärmebildkamera) aufgenommen. Der durch den Wärmebildsensor gegebenenfalls mit seiner Optik gebildete Messbereich erfasst den sich zum Messzeitpunkt vor dem Hintergrundstrahler befindlichen Strangabschnitt jedenfalls vollständig in seiner Breite und darüber hinaus zumindest einen Teil des dahinter befindlichen Hintergrundstrahlers jederzeit, also insbesondere auch bei den im Betrieb auftretenden Bewegungen bzw. Positionsabweichungen des Stranges. Die erfindungsgemäße Lehre basiert nun darauf, anstelle des Maximalwerts der Messwerte des Wärmebildsensors das Integral über sämtliche Messwerte in dem ausgewerteten Messwertbereich zu bilden, also den Flächeninhalt der bestrahlten Pixel oder dergleichen des Messwertbereichs. Dieses Integral umfasst dabei sowohl den zum jeweiligen Messzeitpunkt vor dem Hintergrundstrahler befindlichen Strangabschnitt als auch den Hintergrundstrahler soweit er sich im Messwertbereich befindet. Durch einen Vergleich, insbesondere eine Differenzbildung, dieses Integrals mit einem Referenzwert kann auf die Temperatur des Stranges rückgeschlossen werden. Die Erfindung basiert dabei auf der Erkenntnis, dass beispielsweise bei einer Defokussierung oder einer Bewegung des Stranges das erfindungsgemäß ausgewertete Integral immer im Wesentlichen die gesamte Information über die Temperatur des Stranges wiedergibt. Wird als angenäherte Modellvorstellung für die Abbildung des Stranges auf dem Wärmebildsensor eine Normalverteilung zugrunde gelegt, so ergibt sich für das Integral unter dieser Normalverteilung für unterschiedliche Fokuslagen des Stranges also grundsätzlich ein konstanter Wert, da sich Breite und Höhe der Normalverteilung zueinander entsprechend ändern. Das Integral über den gesamten Messwertbereich ist somit näherungsweise proportional zu der Temperatur und den Abmessungen des Stranges und hängt nur geringfügig von der Fokussierung ab, die sich aus der Position des Stranges ergibt. Im Gegensatz zu der Auswertung des Maximums dieser Normalverteilung, die eine erhebliche Abhängigkeit von der Fokussierung aufweist, liefert das erfindungsgemäße Verfahren auch bei Defokussierung oder einer sich ändernden Fokussierung zuverlässig korrekte Temperaturwerte.

Da die Hintergrundtemperatur des Hintergrundstrahlers bekannt ist, lässt sich bei Kenntnis der Abmessungen und des Emissionsgrads des Stranges beispielsweise aus einem Vergleich des Integrals über den Messwertbereichs mit im Messwertbereich befindlichem Strang einerseits und ohne im Messwertbereich befindlichem Strang andererseits die absolute Strangtemperatur bestimmen, auch wenn der Wärmebildsensor mit seiner Optik nicht optimal auf den Strang fokussiert ist bzw. sich die Position des Strangs im Hinblick auf die Fokusebene des Wärmebildsensors verändert. Die Hintergrundtemperatur des Hintergrundstrahlers kann dabei als Integral über den Messwertbereich des Wärmebildsensors ohne Strang und Referenzierung des so erhaltenen Skalars mit einem Temperatursensor, der die entsprechende Temperatur des Hintergrundstrahlers angibt, im Rahmen eines geeigneten Kalibrierungsprozesses ermittelt werden.

Die Erfinder haben also erkannt, dass ein oszillierender Strang seine Wärmestrahlung lediglich über einen größeren Abschnitt des Messwertbereichs verteilt, so dass die Integration über den Messwertbereich zu einem Temperaturwert, führt, der unabhängig davon ist, ob sich der Strang in einer ruhenden Position befindet oder eine bewegungsbedingte Unschärfe aufweist. Darüber hinaus kann mit dem erfindungsgemäßen Verfahren auch die Temperatur sehr dünner Stränge mit bekannten Durchmessern nach einer Kalibrierung gemessen werden. Auch sehr geringe Temperaturunterschiede zwischen dem Strang und dem Hintergrundstrahler können erfindungsgemäß präzise bestimmt werden.

Aufgrund der Unabhängigkeit des erfindungsgemäßen Verfahrens von einer Fokussierung bzw. Defokussierung des Stranges in Bezug auf den Wärmebildsensor und gegebenenfalls seiner Optik, kann eine Defokussierung sogar bewusst herbeigeführt werden, um beispielsweise eine Überschreitung des Maximalmesswerts des Wärmebildsensors und damit ein Abschneiden der Messwerte, zu verhindern. Auch Schräglagen des Wärmebildsensors bzw. der Ebene eines Flächensensors in Bezug auf den zu messenden Strang sind unproblematisch. Vibriert der Strang, zum Beispiel ein Draht oder eine Glasfaser, beispielsweise um eine Mittenlage, so ergibt sich wie erläutert im Mittel für das erfindungsgemäß ausgewertete Integral ein konstanter, von der Fokussierung weitgehend unabhängiger Wert. Für einen Strang, der sich in Richtung des Wärmebildsensors oder von dem Wärmebildsensor weg bewegt, ergibt sich zwar eine gewisse Abhängigkeit der gemessenen Temperatur von der Position, da neben der Veränderung der Fokuslage auch eine Änderung der den Wärmebildsensor insgesamt erreichenden Wärmemenge erfolgt. Diese Abhängigkeit kann allerdings durch Kompensationsmaßnahmen minimiert werden, insbesondere indem die ermittelte Temperatur von Referenzflächen des Wärmebildsensors in Relation zueinander gesetzt wird. Insofern hat sich erfindungsgemäß außerdem überraschend gezeigt, dass das erfindungsgemäße Verfahren zuverlässig präzise Werte liefert auch wenn der Abstand des Strangs zu dem Wärmebildsensor variiert. Dies ist insofern überraschend, da die ausgehend von einem Objekt auf dem Wärmebildsensor ankommende Gesamtwärmemenge grundsätzlich quadratisch vom Abstand abhängt. Durch die erfindungsgemäße Integration über den Messwertbereich können dennoch zuverlässige Messergebnisse erzielt werden.

Erfindungsgemäß ist der Referenzwert das Integral über den Messwertbereich ohne vor dem Hintergrundstrahler befindlichen Strang.

Auf Grundlage einer entsprechenden Kalibrierung kann anhand des Vergleichs des erfindungsgemäß gebildeten Integrals mit diesem Referenzwert ein Absolutwert für die Temperatur des Strangs bestimmt werden.

Der Hintergrundstrahler kann ein annähernd schwarzer Strahler sein. Zum Einsatz kommt insoweit ein möglichst schwarzer Strahler, soweit dies praktisch und mit vernünftigem Aufwand realisierbar ist. Die Temperatur des Hintergrundstrahlers kann mittels einer Temperaturmesseinrichtung gemessen werden. Weiterhin ist es möglich, den Hintergrundstrahler mittels einer Heizeinrichtung auf eine vorgegebene Temperatur zu beheizen. Mithilfe des Hintergrundstrahlers und dessen bekannter Temperatur kann der Wärmebildsensor auf diesen Temperaturwert kalibriert werden.

Nach einer weiteren Ausgestaltung kann aus dem Vergleich des gebildeten Integrals mit dem Referenzwert unter Berücksichtigung eines angenommenen oder gemessenen Durchmessers des Stranges auf die Temperatur des Stranges geschlossen werden. Der Querschnitt bzw. Durchmesser des in der Regel kreiszylindrischen Stranges muss bekannt sein, um ein durchmesserunabhängiges Temperaturergebnis zu erhalten. Abhängig von dem Einsatzfeld kann es ausreichend sein, einen vorgegebenen Durchmesserwert anzunehmen und der Temperaturbestimmung zugrunde zu legen. Es ist jedoch auch möglich, den Durchmesserwert mittels einer geeigneten Messeinrichtung separat zu bestimmen und dann diesen gemessenen Durchmesserwert der Temperaturbestimmung zugrunde zu legen.

Weiterhin kann aus dem Vergleich des gebildeten Integrals mit dem Referenzwert unter Berücksichtigung eines angenommenen oder gemessenen Emissionsgrads des Stranges auf die Temperatur des Stranges geschlossen werden. Um aus der Aufnahme des Wärmebildsensors auf einen absoluten Temperaturwert schließen zu können, muss der Emissionsgrad des Stranges bekannt sein. Abhängig von der Konstanz des Emissionsgrads in dem jeweiligen Anwendungsfeld kann es wiederum ausreichend sein, einen Emissionsgrad anzunehmen und der Messung zugrunde zu legen. Es kann jedoch auch erforderlich sein, den Emissionsgrad zu bestimmen, insbesondere wenn dieser erheblichen Schwankungen unterliegt.

Eine weitere Ausgestaltung sieht vor, dass der Strang überwiegend oder vollständig von dem Hintergrundstrahler umgeben ist. Insbesondere kann der Hintergrundstrahler ein Hohlraumstrahler sein mit einer Eintrittsöffnung und einer Austrittsöffnung, wobei der Strang durch die Eintrittsöffnung und die Austrittsöffnung durch den Hohlraumstrahler hindurchgefördert wird, und wobei der Hohlraumstrahler mindestens eine Messöffnung umfasst, durch die der ortsauflösende Wärmebildsensor den Strang vor der Innenwand des Hintergrundstrahlers erfasst. Wärmestrahlung wird bekanntermaßen gemäß der folgenden Gleichung durch drei Parameter bestimmt:

$$e + r + t = 1$$

Darin bestimmt "e" den Emissionsgrad, "r" den Reflektionsgrad und "t" den Transmissionsgrad. Beispielsweise bei Metalldrähten kann davon ausgegangen werden, dass der Transmissionsgrad beispielsweise im Infrarot-Messbereich praktisch Null ist. Die obige Gleichung vereinfacht sich dann wie folgt:

$$e + r = 1$$

Bei einem idealen schwarzen Strahler ist der Reflektionsgrad Null, das heißt es gilt e = 1. Bei realen Gegenständen, beispielsweise bei Metalldrähten, ist dagegen der Reflektionsgrad r in der Regel erheblich höher als der Emissionsgrad e. Hinzu kommt, dass sich der Emissionsgrad abhängig von Faktoren wie Oberflächenbeschaffenheit oder auch Temperatur verändert. In der Praxis ist der Emissionsgrad des zu messenden bewegten Stranges daher oftmals und insbesondere bei Metalldrähten nicht bekannt.

Gemäß den zuvor genannten Ausgestaltungen kann daher durch eine externe und allseitige Bestrahlung des zu messenden Stranges der aufgrund des Emissionsgrads e < 1 in der Gleichung e + r = 1 zu 1 fehlende Anteil der Strahlung durch die externe Bestrahlung des Hohlraumstrahlers ausgeglichen werden. Insbesondere wird die von dem Hohlraumstrahler auf den zu messenden Strang geleitete Wärmestrahlung von dem Gegenstand gemäß seinem Reflektionsgrad r reflektiert, so dass der fehlende Teil der Wärmestrahlung durch die externe Bestrahlung quasi "aufgefüllt" wird zu 1. Auf dieser Grundlage lassen sich auch bei unbekanntem Emissionsgrad berührungslose Temperatursensoren in reproduzierbare Temperaturmesswerte kalibrieren. Ein solches Verfahren zum berührungslosen Bestimmen der Temperatur bei unbekanntem Emissionsgrad ist beispielsweise bekannt aus der auf die vorliegende Anmelderin zurückgehenden WO 2014/090994 A2.

Als Messwertbereich kann grundsätzlich der gesamte Messbereich des Wärmebildsensors gewählt werden. Es ist aber selbstverständlich auch denkbar, anstelle des gesamten Messbereichs, also insbesondere sämtliche Pixel des Wärmebildsensors umfassenden Bereich nur einen Ausschnitt des gesamten Messbereichs des Wärmebildsensors als Messwertbereich (Region of Interest ROI) zu nutzen. In dieser Hinsicht wirkt sich aus, dass sich beispielsweise bei Zeilen- oder Flächensensoren die einzelnen Pixel hinsichtlich ihres Ansprechverhaltens und ihrer Abhängigkeit von unterschiedlichen Temperaturwerten aufgrund unvermeidbarer Herstellungstoleranzen in zunächst nicht bekannter Weise unterscheiden können. Dies kann sowohl einen unterschiedlichen Nullpunkt der einzelnen Pixel betreffen als auch eine unterschiedliche Steigung in Abhängigkeit von der Temperatur. Sofern als Messwertbereich nur ein Teilbereich des gesamten Messbereichs des Wärmebildsensors gewählt wird, ist insoweit eine Normierung erforderlich, um die eingangs genannte unterschiedliche Temperaturabhängigkeit rechnerisch zu eliminieren. Wird dagegen der gesamte Messbereich des Wärmebildsensors als Messwertbereich genutzt, ist eine solche Normierung nicht erforderlich.

In besonders praxisgemäßer Weise kann als Wärmebildsensor eine Infrarot-Wärmebildkamera (sogenanntes Bolometer) zum Einsatz kommen.

Wie ebenfalls bereits erläutert, kann der Strang insbesondere eine Glasfaser oder ein Metalldraht sein. Der Metalldraht kann beispielsweise als metallischer Leiter dienen. Handelt es sich bei dem Strang um einen solchen Metalldraht, kann dieser beispielsweise nach dem erfindungsgemäßen Bestimmen der Temperatur in einer Extrusionsanlage mit einer Kunststoffisolierung versehen werden. Hinsichtlich Glasfasern sind der Bedarf und die Probleme bei einer Bestimmung der Temperatur eingangs erläutert worden. Als besonderes Problem, welches erfindungsgemäß gelöst ist, ergibt sich hier ein Emissionsgrad von typischen Glasfasern aus Quarzglas von ca. 0,95. Wie ebenfalls eingangs erläutert, sind mit dem erfindungsgemäßen Verfahren dennoch zuverlässig präzise Temperaturwerte bestimmbar.

Wie ebenfalls eingangs erläutert, können mit dem erfindungsgemäßen Verfahren insbesondere Stränge kleiner Abmessungen sicher gemessen werden. Entsprechend kann der beispielsweise kreiszylindrische Strang einen Durchmesser von weniger als 500 $\mu$m, vorzugsweise weniger als 250 $\mu$m, weiter vorzugsweise weniger als 150 $\mu$m, aufweisen. Beispielsweise Glasfasern besitzen typischerweise einen Durchmesser von ca. 125 $\mu$m. Die zulässige Dickenabweichung liegt regelmäßig unter 10 $\mu$m, insbesondere können nicht beschichtete Glasfasern zulässige Dickenabweichungen von unter 1 $\mu$m haben. Erfindungsgemäß können sehr dünne Stränge auch dann sicher gemessen werden, wenn ihr Durchmesser kleiner ist als das Auflösungsvermögen des Wärmebildsensors und gegebenenfalls seiner Optik. Nach einer weiteren Ausgestaltung kann der Strang vor dem oder nach dem Fördern entlang des Hintergrundstrahlers und entsprechend dem erfindungsgemäßen Bestimmen der Temperatur in einer Kühleinrichtung, vorzugsweise einer Helium-Kühleinrichtung, gekühlt werden.

Weiterhin kann der Strang nach dem Fördern entlang des Hintergrundstrahlers und entsprechend dem erfindungsgemäßen Bestimmen der Temperatur, und insbesondere nach dem Führen durch eine Kühleinrichtung, in einer Beschichtungseinrichtung mit einer Beschichtung versehen werden.

Insbesondere kann das erfindungsgemäße Verfahren in einem Glasfaser-Ziehturm durchgeführt werden.

Ein Ausführungsbeispiel der Erfindung wird nachfolgend innerhalb von Figuren näher erläutert. Es zeigen schematisch:

Fig. 1    eine Vorrichtung zur Durchführung des erfindungsgemäßen Verfahrens in einer Ansicht von oben,

Fig. 2    die Vorrichtung aus Figur 1 in einer Seitenansicht,

Fig. 3    ein Diagramm mit zwei theoretischen Messergebnissen,

Fig. 4    ein Diagramm mit zwei Integralen gebildet aus den Messergebnissen der Figur 3

Fig. 5    ein Diagramm mit zwei realen Messergebnissen der erfindungsgemäßen Temperaturbestimmung,

Fig. 6    ein Diagramm mit einem Vergleich des erfindungsgemäßen Verfahrens mit einem Verfahren nach dem Stand der Technik.

Soweit nichts anderes angegeben ist, bezeichnen in den Figuren gleiche Bezugszeichen gleiche Gegenstände.

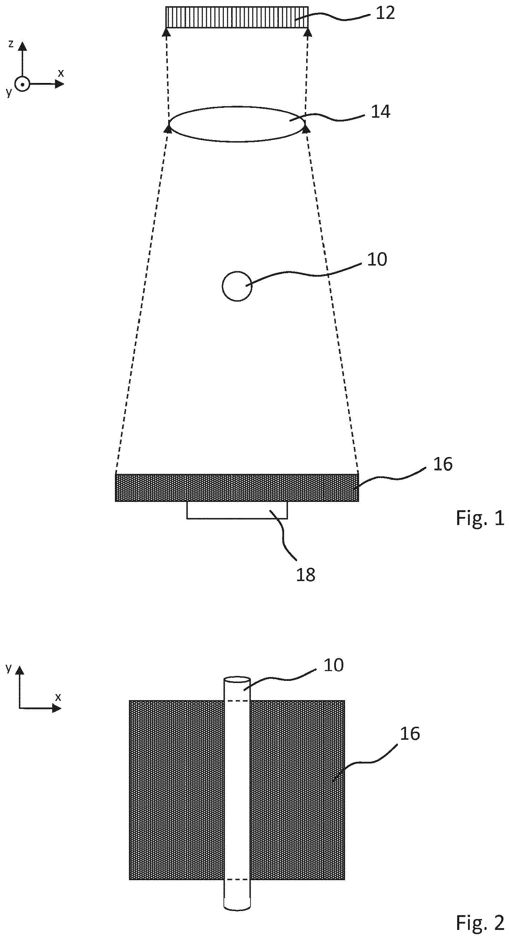

In den Figuren 1 und 2 ist eine Messanordnung gezeigt zur Durchführung des erfindungsgemäßen Verfahrens. Bei dem Bezugszeichen 10 ist ein durch die Messanordnung geführter kreiszylindrischer Strang, beispielsweise ein Metalldraht oder eine Glasfaser, ausschnittsweise zu erkennen. Ein Wärmebildsensor 12 mit einer Optik 14, vorliegend einer Linse 14, erfasst den Strang 10 vor einem Hintergrundstrahler 16, vorliegend einem im Wesentlichen schwarzen Strahler. Die Temperatur des Hintergrundstrahlers 16 wird durch einen Temperatursensor 18 ermittelt.

Der Strang 10 wird während des Förderns entlang des Hintergrundstrahlers 16 von dem Wärmebildsensor 12, beispielsweise einem Infrarot-Zeilen- oder -Flächen-Sensor 12, vor dem Hintergrundstrahler 16 aufgenommen. Eine in den Figuren nicht näher dargestellte Auswerteeinrichtung ermittelt das Integral über beispielsweise den gesamten Messbereich des Wärmebildsensors 12 als Messwertbereich und bildet die Differenz dieses Integrals mit einem Referenzwert. Im vorliegenden Beispiel kann als Referenzwert das Integral über den Messwertbereich ohne durch die Messanordnung geführten Strang 10 gewählt werden. Bei bekanntem Durchmesser und Emissionsgrad des Strangs 10 kann auf dieser Grundlage und unter Berücksichtigung der mit dem Temperatursensor 18 gemessenen Temperatur des Hintergrundstrahlers 16 zuverlässig und präzise die Temperatur des Strangs 10 in der erfindungsgemäßen Weise ermittelt werden.

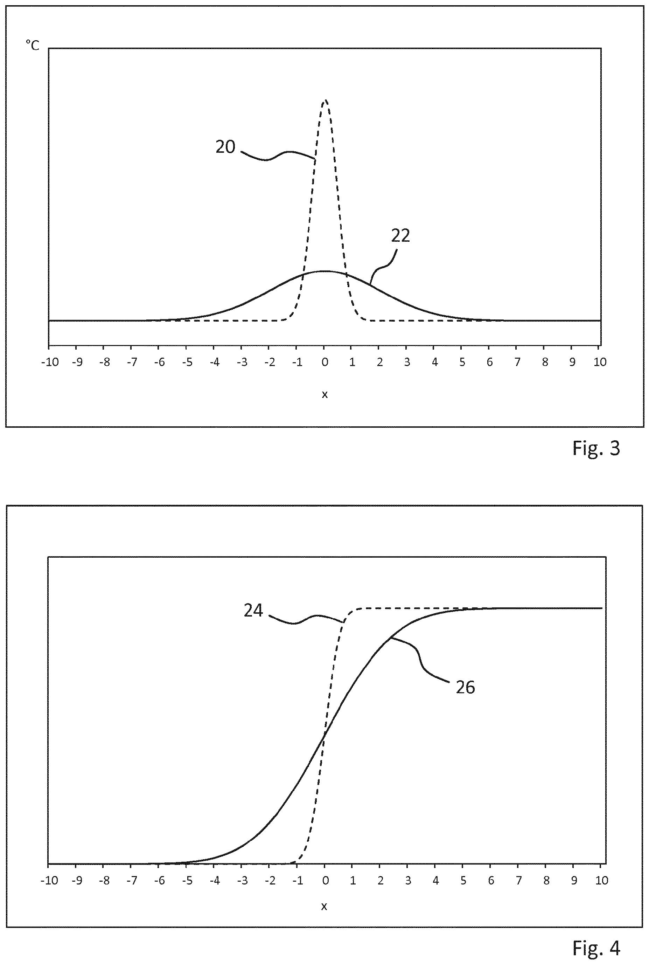

Dies soll anhand der Diagramme der Figuren 3 bis 6 noch näher erläutert werden. In Figur 3 ist bei gleichem Strang und gleicher Temperatur der theoretische Verlauf des Messsignals entlang der x-Richtung in den Figuren 1 und 2 einerseits bei dem Bezugszeichen 20 für einen ruhenden Strang 10 und bei dem Bezugszeichen 22 für einen oszillierenden Strang 10 dargestellt. Aufgetragen ist die von dem Wärmebildsensor gemessene Temperatur über dem Ort. Erkennbar ist, dass sich die Maximalwerte der beiden in Figur 3 aufgetragenen Kurven erheblich unterscheiden, obwohl der Strang in beiden Fällen dieselbe Temperatur aufweist. Mit der Auswertung des Maximalwerts für eine Temperaturbestimmung ist also ein erheblicher Messfehler verbunden.

In Figur 4 ist bei dem Bezugszeichen 24 das Integral über die Kurve 20 aus Figur 3 und bei dem Bezugszeichen 26 das Integral über die Kurve 22 aus Figur 3 gezeigt. Das Integral ergibt jeweils den Flächeninhalt unter den Kurven 24, 26. In Figur 4 ist erkennbar, dass der Flächeninhalt unter den Kurven 24, 26 praktisch identisch ist, so dass eine Bestimmung der Temperatur auf Grundlage des Integrals erkennbar unabhängig ist von der Oszillation des Stranges 10 bzw. einer hierdurch bedingten Bewegungsunschärfe.

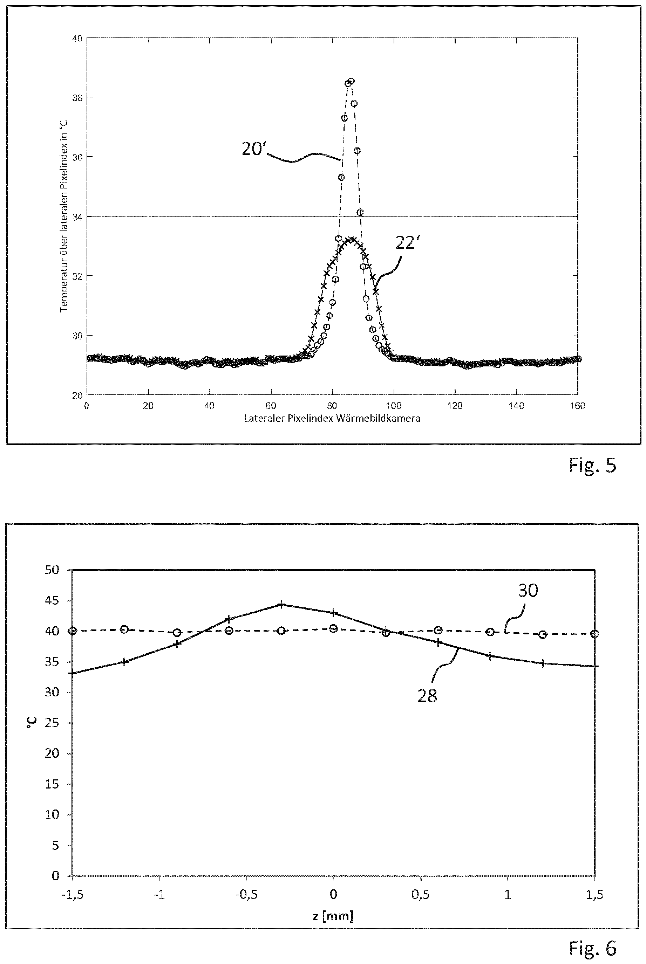

In Figur 5 sind zur Veranschaulichung reale Messwerte aufgetragen. Bei dem Bezugszeichen 20' ist ein Messwertverlauf für eine gute Fokussierung und einen ruhenden Strang zu erkennen. Bei dem Bezugszeichen 22' ist bei gleicher Temperatur und gleichem Strang 10 ein Messwertverlauf für eine schlechte Fokussierung bzw. eine Vibration des Stranges 10 zu erkennen.

Das Diagramm in Figur 6 zeigt bei dem Bezugszeichen 28 die sich nach dem Verfahren des Standes der Technik mit einer Auswertung des Maximums der Messkurve bei gleichem Strang und gleicher Strangtemperatur, jedoch sich in z-Richtung in Figur 1, also in Richtung auf den Wärmebildsensor 12 zu oder von dem Wärmebildsensor 12 weg verändernder Lage des Strangs 10, ergebenden Temperaturwerte. Erkennbar ist, dass die sich verändernde Lage des Stranges 10 in Bezug auf den Fokus des Wärmebildsensors 12 mit seiner Linse 14 zu erheblichen Abweichungen des bestimmten Temperaturwerts führt. Mit anderen Worten hängt der bei einer Auswertung des Maximums der in Figur 5 gezeigten Messkurven ermittelte Temperaturwert erheblich von der Position des Strangs 10 in Bezug auf die Fokusebene des Wärmebildsensors 12 und seiner Linse 14 ab.

Bei dem Bezugszeichen 30 ist derselbe Temperaturmesswertverlauf für das erfindungsgemäße Verfahren dargestellt. Dabei ist gut erkennbar, dass die Lage des Stranges 10 in z-Richtung in Bezug auf die Fokusebene des Wärmebildsensors 12 mit seiner Linse 14 keinen nennenswerten Einfluss auf das Ergebnis der erfindungsgemäßen Temperaturbestimmung hat.

## Patentansprüche

1. Verfahren zum Bestimmen der Temperatur eines vibrierenden Stranges (10), wobei der Strang (10) in Form einer Glasfaser oder eines Metalldrahtes in Richtung seiner Längsachse entlang eines Hintergrundstrahlers (16) bekannter Temperatur gefördert wird, mit den Schritten:

   - der Strang (10) wird während des Förderns mit einem ortsauflösenden Wärmebildsensor (12) vor dem Hintergrundstrahler (16) aufgenommen, wobei der durch den Wärmebildsensor (12) gebildete Messwertbereich jederzeit den sich zum Messzeitpunkt vor dem Hintergrundstrahler (16) befindlichen Strangabschnitt (10) vollständig in seiner Breite und darüber hinaus zumindest einen Teil des dahinter befindlichen Hintergrundstrahlers (16) erfasst,
   - es wird das Integral gebildet über den den vor dem Hintergrundstrahler (16) befindlichen Strangabschnitt jederzeit vollständig erfassenden Messwertbereich des Wärmebildsensors (12),
   - aus einem Vergleich des gebildeten Integrals mit einem Referenzwert wird auf die Temperatur des Stranges (10) geschlossen, wobei der Referenzwert das Integral über den Messwertbereich ohne vor dem Hintergrundstrahler (16) befindlichen Strang (10) ist.

2. Verfahren nach einem der vorhergehenden Ansprüche, **dadurch gekennzeichnet, dass** der Hintergrundstrahler (16) ein annähernd schwarzer Strahler ist.

3. Verfahren nach einem der vorhergehenden Ansprüche, **dadurch gekennzeichnet, dass** die Temperatur des Hintergrundstrahlers (16) mittels einer Temperaturmesseinrichtung gemessen wird.

4. Verfahren nach einem der vorhergehenden Ansprüche, **dadurch gekennzeichnet, dass** der Hintergrundstrahler (16) mittels einer Heizeinrichtung auf eine vorgegebene Temperatur beheizt wird.

5. Verfahren nach einem der vorhergehenden Ansprüche, **dadurch gekennzeichnet, dass** aus dem Vergleich des gebildeten Integrals mit dem Referenzwert unter Berücksichtigung eines angenommenen oder gemessenen Durchmessers des Stranges (10) auf die Temperatur des Stranges (10) geschlossen wird.

6. Verfahren nach einem der vorhergehenden Ansprüche, **dadurch gekennzeichnet, dass** aus dem Vergleich des gebildeten Integrals mit dem Referenzwert unter Berücksichtigung eines angenommenen oder gemessenen Emissionsgrads des Stranges (10) auf die Temperatur des Stranges (10) geschlossen wird.

7. Verfahren nach einem der vorhergehenden Ansprüche, **dadurch gekennzeichnet, dass** der Strang (10) überwiegend oder vollständig von dem Hintergrundstrahler (16) umgeben ist.

8. Verfahren nach Anspruch 7, **dadurch gekennzeichnet, dass** der Hintergrundstrahler (16) ein Hohlraumstrahler ist mit einer Eintrittsöffnung und einer Austrittsöffnung, wobei der Strang (10) durch die Eintrittsöffnung und die Austrittsöffnung durch den Hohlraumstrahler hindurch gefördert wird, und wobei der Hohlraumstrahler mindestens eine Messöffnung umfasst, durch die der ortsauflösende Wärmebildsensor (12) den Strang (10) vor der Innenwand des Hintergrundstrahlers (16) erfasst.

9. Verfahren nach einem der vorhergehenden Ansprüche, **dadurch gekennzeichnet, dass** als Messwertbereich der gesamte Messbereich des Wärmebildsensors (12) gewählt wird.

10. Verfahren nach einem der vorhergehenden Ansprüche, **dadurch gekennzeichnet, dass** der Wärmebildsensor (12) eine Infrarot-Wärmebildkamera ist.

11. Verfahren nach einem der vorhergehenden Ansprüche, **dadurch gekennzeichnet, dass** der Strang (10) einen Durchmesser von weniger als 500 $\mu$m aufweist.

12. Verfahren nach einem der vorhergehenden Ansprüche, **dadurch gekennzeichnet, dass** der Strang (10) einen Durchmesser von weniger als 250 $\mu$m aufweist.

13. Verfahren nach einem der vorhergehenden Ansprüche, **dadurch gekennzeichnet, dass** der Strang (10) einen Durchmesser von weniger als 150 $\mu$m aufweist.

14. Verfahren nach einem der vorhergehenden Ansprüche, **dadurch gekennzeichnet, dass** der Strang (10) vor oder nach dem Fördern entlang des Hintergrundstrahlers (16) in einer Kühleinrichtung gekühlt wird.

15. Verfahren nach einem der vorhergehenden Ansprüche, **dadurch gekennzeichnet, dass** der Strang (10) nach dem Fördern entlang des Hintergrundstrahlers (16) in einer Beschichtungseinrichtung mit einer Beschichtung versehen wird.

16. Verfahren nach einem der vorhergehenden Ansprüche, **dadurch gekennzeichnet, dass** das Verfahren in einem Glasfaser-Ziehturm durchgeführt wird.

## Claims

1. A method for determining the temperature of a vibrating strand (10), wherein the strand (10) in the form of a glass fiber or a metal wire is conveyed in the direction of its longitudinal axis along a background radiator (16) of known temperature, having the following steps:

  - the strand (10) is received with a spatially resolving thermal imaging sensor (12) in front of the background radiator (16) while it is being conveyed, wherein the measuring value area formed by the thermal imaging sensor (12) completely detects, at all times, the width of the strand portion (10) located in front of the background radiator (16) at the time of measurement and, moreover, at least one part of the background radiator (16) located behind it,
  - the integral is formed across the measuring value area of the thermal imaging sensor (12) which, at all times, completely detects the strand portion located in front of the background radiator (16),
  - the temperature of the strand (10) is deduced by comparing the formed integral with a reference value, wherein the reference value is the integral across the measuring value area without the strand (10) located in front of the background radiator (16).

2. The method according to any one of the preceding claims, **characterized in that** the background radiator (16) is an approximately black radiator.

3. The method according to any one of the preceding claims, **characterized in that** the temperature of the background radiator (16) is measured by means of a temperature-measuring apparatus.

4. The method according to any one of the preceding claims, **characterized in that** the background radiator (16) is heated to a predefined temperature by means of a heating apparatus.

5. The method according to any one of the preceding claims, **characterized in that** the temperature of the strand (10) is deduced by comparing the formed integral with the reference value by taking into account an assumed or measured diameter of the strand (10).

6. The method according to any one of the preceding claims, **characterized in that** the temperature of the strand (10) is deduced by comparing the integral formed with the reference value by taking into account an assumed or measured emissivity of the strand (10).

7. The method according to any one of the preceding claims, **characterized in that** the strand (10) is predominantly or completely surrounded by the background radiator (16).

8. The method according to Claim 7, **characterized in that** the background radiator (16) is a cavity radiator with an inlet opening and an outlet opening, wherein the strand (10) is conveyed through the inlet opening and the outlet opening, through the cavity radiator, and wherein the cavity radiator comprises at least one measuring opening, through which the spatially resolving thermal imaging sensor (12) detects the strand (10) in front of the inner wall of the background radiator (16).

9. The method according to any one of the preceding claims, **characterized in that** the entire measuring area of the thermal imaging sensor (12) is selected as the measuring value area.

10. The method according to any one of the preceding claims, **characterized in that** the thermal imaging sensor (12) is an infrared thermal imaging camera.

11. The method according to any one of the preceding claims, **characterized in that** the strand (10) has a diameter of less than 500 μm.

12. The method according to any one of the preceding claims, **characterized in that** the strand (10) has a diameter of less than 250 μm.

13. The method according to any one of the preceding claims, **characterized in that** the strand (10) has a diameter of less than 150 μm.

14. The method according to any one of the preceding claims, **characterized in that** the strand (10) is cooled in a cooling apparatus before or after it is conveyed along the background radiator (16).

15. The method according to any one of the preceding claims, **characterized in that** the strand (10) is provided with a coating in a coating apparatus after being conveyed along the background radiator (16).

16. The method according to any one of the preceding claims, **characterized in that** the method is performed in a glass fiber drawing tower.

**Revendications**

1. Procédé de détermination de la température d'une barre vibrante (10), dans lequel la barre (10) sous la forme d'une fibre de verre ou d'un fil métallique est transportée dans la direction de son axe longitudinal le long d'un élément rayonnant de fond (16) présentant une température connue, comprenant les étapes suivantes :

   la barre (10) est captée par un capteur d'imagerie thermique à résolution spatiale (12) devant l'élément rayonnant de fond (16) pendant le transport, où la plage de valeur de mesure formée par le capteur d'imagerie thermique (12) détecte à tout moment la section de barre (10) située devant l'élément rayonnant de fond (16) à l'instant de mesure dans l'ensemble de sa largeur ainsi qu'une partie au moins de l'élément rayonnant de fond (16) situé derrière celle-ci, l'intégrale est formée sur la plage de valeur de mesure du capteur d'imagerie thermique (12) détectant à tout moment l'ensemble de la section de barre située devant l'élément rayonnant de fond (16),
   la température de la barre (10) est déduite à partir d'une comparaison entre l'intégrale formée et une valeur de référence, la valeur de référence correspondant à l'intégrale sur la plage de valeur de mesure sans barre (10) située devant l'élément rayonnant de fond (16).

2. Procédé selon l'une des revendications précédentes, **caractérisé en ce que** l'élément rayonnant de fond (16) est un élément rayonnant quasiment noir.

3. Procédé selon l'une des revendications précédentes, **caractérisé en ce que** la température de l'élément rayonnant de fond (16) est mesurée au moyen d'un dispositif de mesure de température.

4. Procédé selon l'une des revendications précédentes, **caractérisé en ce que** l'élément rayonnant de fond (16) est chauffé à une température prédéfinie au moyen d'un dispositif de chauffage.

5. Procédé selon l'une des revendications précédentes, **caractérisé en ce que** la température de la barre (10) est déduite de la comparaison entre l'intégrale formée et la valeur de référence, en tenant compte d'un diamètre supposé ou mesuré de la barre (10).

6. Procédé selon l'une des revendications précédentes, **caractérisé en ce que** la température de la barre (10) est déduite de la comparaison entre l'intégrale formée et la valeur de référence, en tenant compte d'un degré d'émission supposé ou mesuré de la barre (10).

**7.** Procédé selon l'une des revendications précédentes, **caractérisé en ce que** la barre (10) est majoritairement ou entièrement entourée par l'élément rayonnant de fond (16).

**8.** Procédé selon la revendication 7, **caractérisé en ce que** l'élément rayonnant de fond (16) est un élément rayonnant à cavité avec une ouverture d'entrée et une ouverture de sortie, dans lequel la barre (10) est transporté à travers l'élément rayonnant à cavité par l'ouverture d'entrée et l'ouverture de sortie, et dans lequel l'élément rayonnant à cavité comporte au moins une ouverture de mesure, à travers laquelle le capteur d'imagerie thermique à résolution spatiale (12) détecte la barre (10) devant la paroi intérieure de l'élément rayonnant de fond (16).

**9.** Procédé selon l'une des revendications précédentes, **caractérisé en ce que** la totalité de la plage de mesure du capteur d'imagerie thermique (12) est définie comme plage de valeur de mesure.

**10.** Procédé selon l'une des revendications précédentes, **caractérisé en ce que** le capteur d'imagerie thermique (12) est une caméra thermique infrarouge.

**11.** Procédé selon l'une des revendications précédentes, **caractérisé en ce que** la barre (10) présente un diamètre inférieur à 500 $\mu$m.

**12.** Procédé selon l'une des revendications précédentes, **caractérisé en ce que** la barre (10) présente un diamètre inférieur à 250 $\mu$m.

**13.** Procédé selon l'une des revendications précédentes, **caractérisé en ce que** la barre (10) présente un diamètre inférieur à 150 $\mu$m.

**14.** Procédé selon l'une des revendications précédentes, **caractérisé en ce que** la barre (10) est refroidie dans un dispositif de refroidissement avant ou après le transport le long de l'élément rayonnant de fond (16).

**15.** Procédé selon l'une des revendications précédentes, **caractérisé en ce que** la barre (10) est pourvue d'un revêtement dans un dispositif de revêtement après le transport le long de l'élément rayonnant de fond (16).

**16.** Procédé selon l'une des revendications précédentes, **caractérisé en ce que** le procédé est mis en oeuvre dans une tour de fibrage pour fibre de verre.

Fig. 1

Fig. 2

Fig. 3

Fig. 4

Fig. 5

Fig. 6

**EP 3 285 054 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014090994 A2
- WO 2016096201 A1